# EUROPEAN PATENT SPECIFICATION

(11) **EP 1 786 662 B1**
(45) Date of publication and mention of the grant of the patent: **10.11.2010**
(21) Application number: 05749647.3
(22) Date of filing: 01.06.2005
(51) Int. Cl.: B62D 55/088

(54) **A SNOW AND DEBRIS DEFLECTOR FOR A TRACK SYSTEM**
SCHNEE- UND SCHMUTZABLENKVORRICHTUNG FÜR EIN LAUFKETTENSYSTEM
DEFLECTEUR POUR NEIGE ET DEBRIS ADAPTE A UN SYSTEME DE CHENILLE

(30) Priority: 09.09.2004 CA 2470548; 17.09.2004 CA 2482036
(43) Date of publication of application: 23.05.2007
(73) Proprietor: Soucy International, Inc., Drummondville, Québec J2B 6W3 (CA)
(72) Inventor: BRETON, Rémi, Saint-Charles-de-Drummond, Québec J2C 8K (CA)
(74) Representative: Vuillermoz, Bruno
(86) International application number: PCT/CA2005/000838
(87) International publication number: WO 2006/026848

(56) References cited:
- WO-A-83/01234
- JP-A- 4 103 477
- JP-A- 11 079 008
- JP-A- 2001 138 965
- JP-A- 2001 138 965
- JP-A- 2004 217 154
- SU-A1- 1 751 035
- US-A- 4 198 103
- US-A- 4 553 790
- US-A- 5 005 922

## Description

### FIELD OF THE INVENTION

The present invention relates to track type vehicles, such as, but not limited to a construction vehicle or a military vehicle, and more specifically to a snow, ice, gravel, soil and debris deflector for a track system that reduces the amount of such snow, ice, gravel, soil and debris ingestion in the sprocket or idler area of the vehicles during driving operation.

### BACKGROUND OF THE INVENTION

Conventionally, a military vehicle comprises a set of 5 or 6 wheels on each side of the vehicle over which a track runs. The suspension of the wheels is independent. The system also comprises a sprocket and an idler, at each end of the vehicle that is above the ground. The way the track engages wheels to the sprocket and the idler makes it suitable for ingestion of soft soil, gravel, snow, ice or other debris. The small angle formed by the track will cause such substances to fall in and follow the track and then be ingested by the sprocket or the idler, especially when making small radius turn maneuvers. For example, a conventional front drive vehicle will ingest debris in the sprocket when turning in backward motion, and ingest debris in the idler when turning in forward motion.

This ingestion will typically create over-tension in the track system and eventually create failures especially when a rubber track is used. It could also make the track to touch the sponson and squeeze or damage components, or even force the track to fall off the wheels.

U.S. Patent No. 4,763,961 issued to Parrot on Aug. 16, 1988 disclosed a debris removal apparatus which includes a hydraulically-operated pusher plate to push debris out of a tracking system and prevent debris' accumulation and packing. While this device may be suitable for the particular purpose to which it addresses, the design of this device is very complex.

Japanese Patent Application No. 11326112 (published under no. JP 2001 138965) discloses another debris removal device comprising a resilient deflector hanged to a support member. Contrary to the apparatus disclosed in U.S. Patent No. 4,763,961, the device disclosed in the Japanese Patent Application is mounted above the track such as to prevent the accumulation of snow and debris on the outer surface thereof. In addition, in the device disclosed in the Japanese Patent Application, the deflector is always in contact with the outer surface of the track, thereby subjecting it to high wear and tear.

Other debris deflecting devices and apparatuses have also been proposed throughout the years. U.S. Patent No. 4,533,790 proposed lateral dirt guards for preventing the entry of snow and debris into the track systems of a tracked vehicle. International Patent Application No. PCT/US81/01362 (published under no. WO 83/01234) disclosed a scraper for scraping debris from the outer surface of sprocket wheels and/or idler wheels. Japanese Patent Application No. 09235942 (published under no. JP 11079008) disclosed still another snow and debris deflector which comprises angular plates for laterally deflecting snow and debris away from the inner surface of a track. Finally, Japanese Patent Application No. 2003009194 (published under no. JP 2004217154) disclosed a mud guard comprising an assembly of rigid plates located in the periphery of a sprocket wheel or idler wheel. Still, none of these debris deflecting devices and apparatuses have proven satisfactory.

Thus, there is a need to develop an effective snow and debris deflector for a track system without any complex mechanism.

### OBJECTS OF THE INVENTION

Accordingly, an object of the present invention is to provide a snow and debris deflector for a track system that obviates the above-mentioned disadvantages.

A further object of the present invention is to provide a snow and debris deflector for a track system that reduces the amount of snow, ice, gravel, soil or other debris ingestion in a sprocket or idler area of a vehicle equipped with tracks. Another object of the present invention is to provide a snow, ice, gravel, soil and other debris deflector for a track system that keeps the track substantially free of same.

Still a further object of the present invention is to provide a snow, ice, gravel, soil and other debris deflector for a track system which is extremely simple in design and effective in operation.

Still another object of the present invention is to provide a snow, ice, gravel, soil and other debris deflector for a track system which prevents the track from falling off the wheels of the vehicle.

One more object of the present invention is to provide a snow, ice, gravel, soil and other debris deflector for a track system which allows continuity of cleaning action.

Yet another object of the present invention is to provide a deflector that will deflect snow, ice, gravel, soil and other debris while not causing any damage to the rubber track.

Another object of the present invention is to provide a snow, ice, gravel, soil and other debris deflector that can be easily repaired and renovated.

Other and further objects and advantages of the present invention will be obvious upon an understanding of the illustrative embodiments about to be described or will be indicated in the appended claims, and various advantages not referred to herein will occur to one skilled in the art upon employment of the invention in practice.

### SUMMARY OF THE INVENTION

To attain these and other objects which will become more apparent as the description proceeds according to one aspect of the present invention, a snow, ice, gravel, soil and other debris deflector for a track system is provided.

The invention is characterized by a rubber reinforced pad, used in conjunction with a rigid steel plate. The main purpose of this invention is to limit the amount of snow, ice, gravel, soil and other debris ingestion in the track in the sprocket and idler area. This will reduce significantly the build up of material between the sprocket and the track or between the idler and the track. Reducing of the snow, ice, gravel, soil and other debris ingestion in the track in the sprocket and idler areas will considerably diminish the amount of tension created in the track and the system, and also will avoid the track to touch the sponson of the vehicle. This will prevent the track from falling off the wheels of the vehicle (this is sometimes referred to as de-tracking).

The deflector system according to the present invention consists of a rigid plate associated with the vehicle and positioned into a close proximity of a sprocket or idler, the rigid plate having a lower edge, a resilient pad having an upper part customized to be in conjunction with the rigid plate and a lower part freely extended from the upper part and at least partially protruded below the lower edge of the rigid plate to limit the snow, ice, gravel, soil and other debris ingestion in the sprocket or idler areas in a driving condition of the vehicle.

Preferably, the resilient pad has a plurality of vertical reinforcing elements which are projected from at least one surface of the resilient pad. At least one of the reinforcing elements may have a length different from any others. The reinforcing elements are preferably disposed within the resilient pad in a predetermined interval.

Preferably, the resilient pad is made from a molded composite material. The lower part of the resilient pad might have a shape generally matching that of the track system.

Preferably, at least part of the rigid plate is shaped as an arc following the sprocket or idler diameter. Preferably, the rigid plate is designed to avoid any interference with the inside of the track and is positioned with a space of around 0.5 inch to 1.5 inch from the sprocket or idler. Preferably, the lower edge of the rigid plate has a shape generally identical that of the lower part of the resilient pad.

Preferably, the conjunction of the resilient pad with the rigid plate is made in a manner to define a hinge-like point to allow the resilient pad to be solid in the direction of ingestion, but pivotable in other directions during the track system displacements.

Preferably, the resilient pad is rigid enough (in the ingestion direction) to stop, snow, ice, gravel, soil and other similar debris while being flexible enough to absorb high deflection without failure.

The invention accordingly comprises the further constructions, combination of elements, and arrangement of parts which will be exemplified in the construction hereinafter set forth, and the scope of the invention will be indicated in the claims.

### BRIEF DESCRIPTION OF THE DRAWINGS

For a fuller understanding of the nature and object of the invention, reference should be had to the following detailed description taken in connection with the accompanying drawings in which:
Figure 1 is an isometric side view of a snow and debris deflector in a working position, according to the present invention;
Figure 2 is a fragmentary isometric side view of a snow and debris deflector situated about a sprocket or idler;
Figure 3 is an isometric front view of a snow and debris deflector according to the present invention shown removed from its mounting on the track assembly;
Figure 4 is an isometric rear view of a snow and debris deflector according to the present invention shown a rigid plate and resilient pad in divided position; and
Figure 5 is a side view of a snow and debris deflector according to the present invention shown removed from its mounting on the track assembly.
Figure 6 is a side view of the snow and debris deflector shown in figure 1 when the vehicle is moving in direction F.
Figure 7 is a side view of the snow and debris deflector shown in figure 1 when the vehicle is moving in direction R.
Figure 8 is a side view of the snow and debris deflector shown in figure 1 when the vehicle is stopped.

### DETAILED DESCRIPTION OF THE PREFERRED EMBODIMENTS

A snow and debris deflector for a track system according to a preferred embodiment of the present invention is described hereinafter and illustrated in the appended figures.

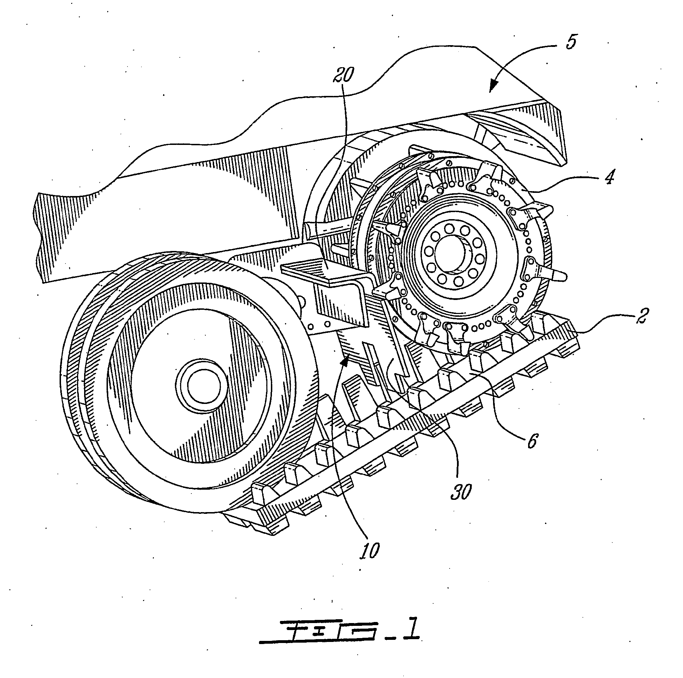

Figures 1 to 5 show a snow and debris deflector 10 for a track system that reduces the amount of snow, ice, gravel, soil and other debris ingestion (not shown) in a sprocket 4 or idler (not shown) area of a vehicle equipped with tracks 2.

The deflector 10 includes a rigid plate 20 and a resilient pad 30. The rigid plate 20 is associated with the vehicle 5 and is positioned into a close proximity of the sprocket 4 or idler (not shown) As seen in Figures 1, 3 and 5 the resilient pad 30 overlaps the rigid plate 20, its upper part 32 being attached to the rigid plate 20 and its lower part 34 freely extending from the upper part 32 below a lower edge 22 of the rigid plate 20 to limit the snow, ice, gravel, soil and other debris ingestion when the vehicle is in driving condition.

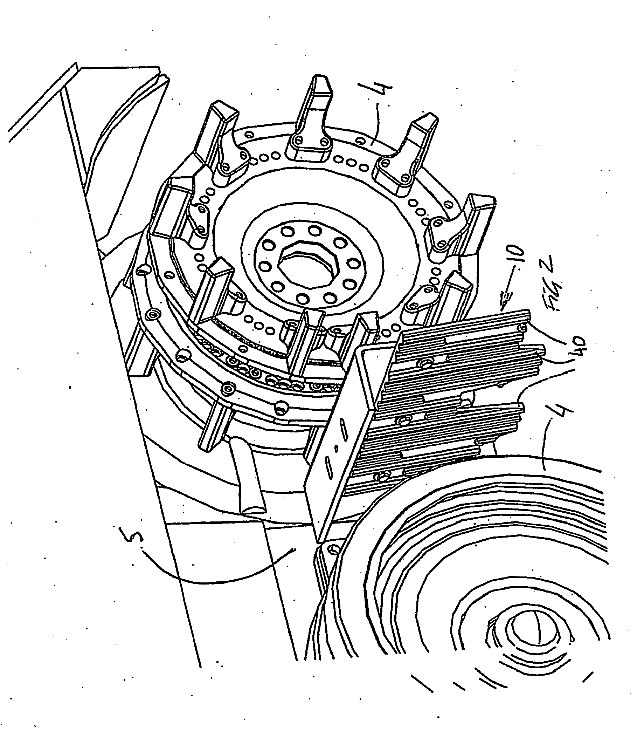

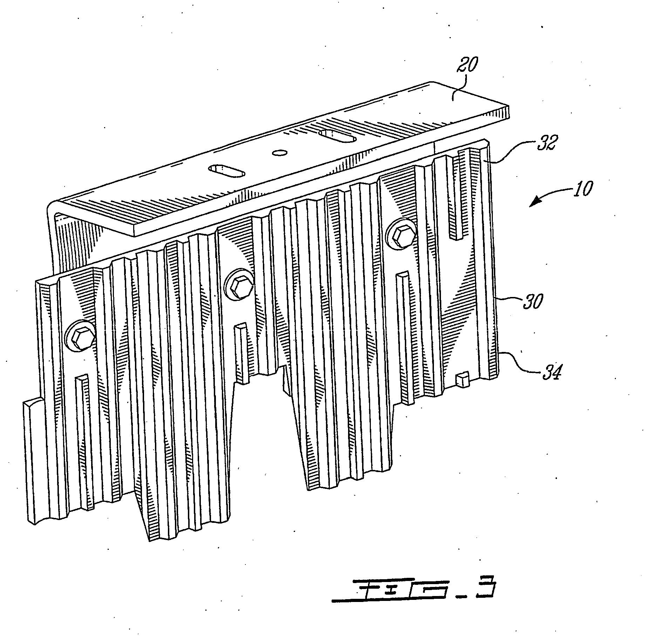

The resilient pad 30 has a plurality of vertical reinforcing elements 40 which are projected from at least one surface of said resilient pad 30. At least one of said reinforcing elements 40 has a length different from any others, as is illustrated in Figures 2 and 3. These reinforcing elements 40 are disposed within resilient pad 30 in a predetermined interval. It is preferable that the resilient pad 30 is made for example from a molded composite material.

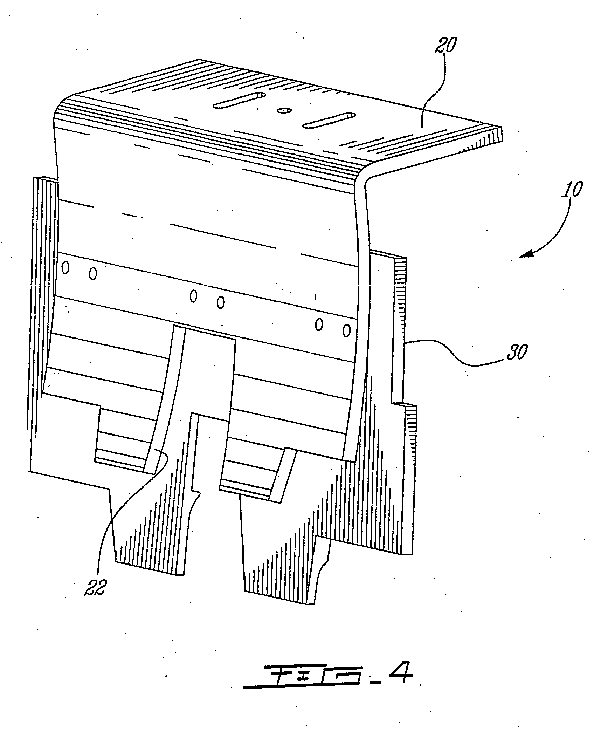

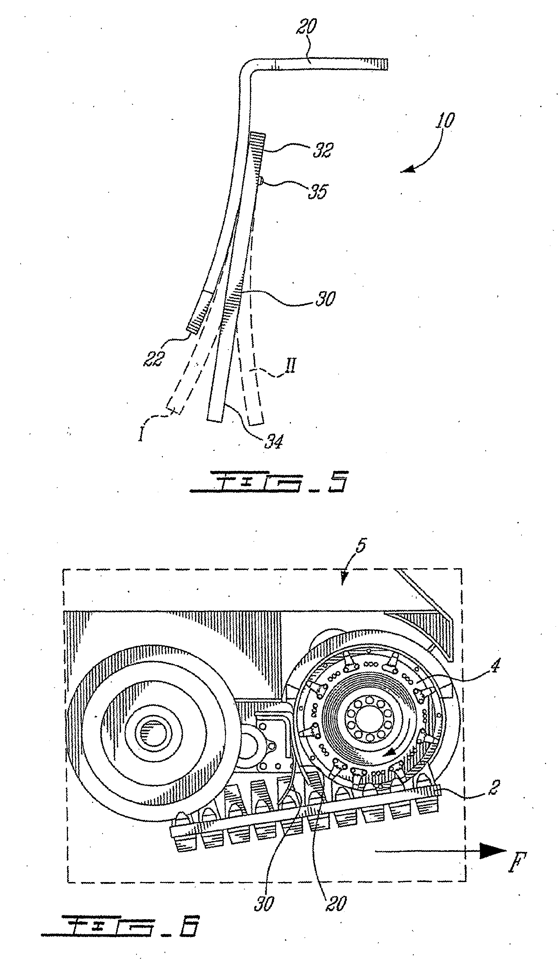

Referring to Figures 1 to 4, the lower part 34 of the resilient pad 30 has a shape which generally matches that of the profile of the inside 6 of the track 2. At least part of the rigid plate 20 is shaped as an arc (see Figures 4 and 5). This arc shape preferably follows the sprocket 4 or idler diameters. The rigid plate 20 is designed to avoid any interference with the inside 6 of the track 2 and is positioned with a small distance (around 0.5 inch to 1.5 inch or 12.5mm to 37.5mm in the case of a military vehicle) from the sprocket 4 or idler periphery. Preferably, the lower edge 22 of the rigid plate 20 also has a shape generally similar to that of the lower part 34 of the resilient pad 30.

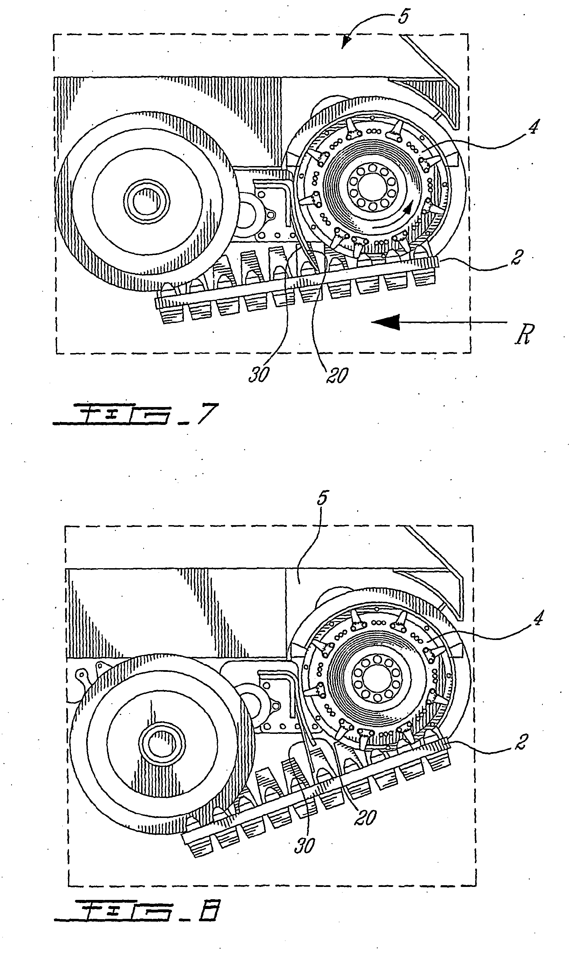

As shown in Figure 5 the conjunction of the resilient pad 30 with the rigid plate 20 is assembled in a manner which allows to define a hinge-like point 35 to permit the resilient pad 30 to be solid in the direction of ingestion (position I which correspond to figure 7), but pivotable in other directions (position II which corresponds to figure 6) during the track system displacements. It is preferable that the rigid plate 20 is made from steel or other similar rigid material.

Tracked vehicles are very often provided with suspensions. As a result, when the vehicle runs over uneven terrain, the track may move upwardly or downwardly and become in contact with the resilient pad 30. The pad 30 may then be subject to severe bending as shown in figures 6 and 7, especially when the track is displaced towards the sprocket as shown in figure 7.

The rigid plate 20 must be fixed to the vehicle such that its lower edge 22 never come in to direct contact with the interior 6 of the track 2 whether the suspension is extended or compressed to its maximum.

As is well understood, these reinforcing elements 40 may assume a variety of forms, lengths and cross-sectional profiles (not shown). Also, these reinforcing elements 40 may be made from any suitable material well known in the art.

Using the snow and debris deflector 10 for a track system according to the present invention allows an effective track system protection without any complex and expensive mechanisms.

The drawings and the description attached to it are only intended to illustrate the idea of the invention. As to the details, the invention may vary within the scope of the claims. So, the shape reinforcing elements 40 may be formed as desired, considering the needs and the specifics of the vehicle.

Although the present snow and debris deflector 10 for a track system has been described with a certain degree of particularity, it is to be understood that the disclosure has been made by way of example only and that the present invention is not limited to the features of the embodiment(s) described and illustrated herein, but includes all variations and modifications within the scope of the invention as hereinafter claimed.

## Claims

1. A snow and debris deflector (10) for preventing debris ingestion between one of a sprocket (4) area and an idler area and a track (2) of a vehicle (5) equipped with a track system, said deflector (10) comprising:
a. a rigid plate (20) associated with said vehicle (5) and positioned into a close proximity of said one of said sprocket (4) and said idler, said rigid plate (20) having a lower edge (22),
b. a resilient pad (30) overlapping said rigid plate (20) and having an upper part (32) attached to said rigid plate (20) and a lower part (34) freely extending from said upper part (32) below said lower edge (22) of said rigid plate (20) to prevent debris ingestion between said one of said sprocket (4) area and said idler area and said track (2) in a driving condition of said vehicle (5),
**characterised in that** said resilient pad (30) is mounted to said rigid plate (20) to define a hinge-like point (35) allowing said lower part (34) to partially abut on said rigid plate (20) such as to be solid in the direction of ingestion when said track (2) travels toward said one of said sprocket (4) area and said idler area, and allowing said lower part (34) to pivot about said hinge-like point (35) away from said rigid plate (20) when said track (2) travels away from said one of said sprocket (4) area and said idler area.

2. A deflector (10) according to claim 1, wherein said resilient pad (30) has a plurality of vertical reinforcing elements (40) which are projected from at least one surface of said resilient pad (30).

3. A deflector (10) according to claim 2, wherein at least one of said reinforcing elements (40) has a length different from any others.

4. A deflector (10) according to claim 2 or 3, wherein said reinforcing elements (40) are disposed within said resilient pad in a predetermined interval.

5. A deflector (10) according to any one of claims 1 to 4, wherein said resilient pad (30) is made from a molded composite material.

6. A deflector (10) according to any one of claims 1 to 5, wherein said lower part (34) of said resilient pad (30) has a shape generally matching that of the interior (6) profile of at least one of said tracks (2).

7. A deflector (10) according to claim 1, wherein at least part of said rigid plate (20) is shaped as an arc following the sprocket (4) or idler diameter.

8. A deflector (10) according to claim 1 or 7, wherein said rigid plate (20) is designed to avoid any interference with the inside (6) of said track (2) and is positioned with a space of around 12.5 mm to 37.5 mm from said sprocket (4) or said idler.

9. A deflector (10) according to claim 1, 7 or 8, wherein said lower edge (22) of said rigid plate (20) has a shape generally similar to that of said lower part (34) of said resilient pad (30).

## Patentansprüche

1. Schnee- und Schmutzablenkvorrichtung (10) zum Verhindern, dass Schmutz zwischen entweder einen Kettenradbereich (4) oder einen Zwischenradbereich und eine Kette (2) eines Fahrzeugs (5) eindringt, das mit einem Laufkettensystem ausgerüstet ist, wobei die Ablenkvorrichtung (10) aufweist:
a. eine zum Fahrzeug (5) gehörige starre Platte (20), die in unmittelbarer Nähe zu einem Kettenrad (4) und Zwischenrad angeordnet ist, wobei die starre Platte (20) eine Unterkante (22) hat,
b. eine federelastische Klappe (30), die die starre Platte (20) überlappt, und einen oberen Teil (32) hat, der an der starren Platte (20) angebracht ist, und einen unteren Teil (34), der sich frei vom oberen Teil (32) unter die Unterkante (22) der starren Platte (20) erstreckt, um das Eindringen von Schmutz zwischen entweder einen Kettenradbereich (4) oder einen Zwischenradbereich und eine Kette im Fahrzustand des Fahrzeugs (5) zu verhindern,
**dadurch gekennzeichnet, dass** die federelastische Klappe (30) so an der starren Platte (20) angebracht ist, dass sie einen gelenkartigen Punkt (35) definiert, wodurch der untere Teil (34) teilweise an der starren Platte (20) anliegen kann, so dass er in Richtung des Eindringens fest ist, wenn sich die Kette (2) zu entweder dem Kettenradbereich (4) oder dem Zwischenradbereich bewegt, oder der untere Teil (34) um den gelenkartigen Punkt (35) weg von der starren Platte (20) schwenken kann, wenn sich die Kette (2) von entweder dem Kettenradbereich (4) oder dem Zwischenradbereich weg bewegt.

2. Ablenkvorrichtung (10) nach Anspruch 1, bei der die federelastische Klappe (30) eine Mehrzahl senkrechter Verstärkungselemente (40) hat, die aus mindestens einer Oberfläche der federelastischen Klappe (30) herausragen.

3. Ablenkvorrichtung (10) nach Anspruch 2, bei der mindestens eines der Verstärkungselemente (40) eine Länge hat, die von der der anderen verschieden ist.

4. Ablenkvorrichtung (10) nach Anspruch 2 oder 3, bei der die Verstärkungselemente (40) in der federelastischen Klappe in vorgegebenen Abständen angeordnet sind.

5. Ablenkvorrichtung (10) nach einem der Ansprüche 1 bis 4, bei der die federelastische Klappe (30) aus einem geformten Verbundmaterial besteht.

6. Ablenkvorrichtung (10) nach einem der Ansprüche 1 bis 5, bei der der untere Teil (34) der federelastischen Klappe (30) eine Form hat, die allgemein dem inneren (6) Profil mindestens einer der Ketten (2) entspricht.

7. Ablenkvorrichtung (10) nach Anspruch 1, bei der zumindest ein Teil der starren Platte (20) die Form eines Bogens hat, der dem Durchmesser des Kettenrades (4) oder Zwischenrades angeglichen ist.

8. Ablenkvorrichtung (10) nach Anspruch 1 oder 7, bei der die starre Platte (20) so ausgeführt ist, dass eine gegenseitige Berührung mit dem Innern (6) der Kette (2) vermieden wird, und bei der sie in einem Abstand von ca. 12,5 mm bis 37,5 mm vom Kettenrad (4) oder Zwischenrad positioniert ist.

9. Ablenkvorrichtung (10) nach Anspruch 1, 7 oder 8, bei der die Unterkante (22) der starren Platte eine Form hat, die allgemein ähnlich der des unteren Teils (34) der federelastischen Klappe (30) ist.

## Revendications

1. Détecteur (10) pour neige et débris destiné à empêcher l'introduction de débris entre une zone parmi une zone de pignon (4) et une zone de galet libre et une chenille (2) d'un véhicule (5) équipé d'un système de chenille, ledit déflecteur (10) comprenant :
a. une plaque rigide (20) associée audit véhicule (5) et positionnée à proximité immédiate dudit un parmi ledit pignon (4) et ledit galet libre, ladite plaque rigide (20) ayant un bord inférieur (22),
b. un patin résilient (30) chevauchant ladite plaque rigide (20) et ayant une partie supérieure (32) fixée à ladite plaque rigide (20) et une partie inférieure (34) s'étendant librement depuis ladite partie supérieure (32) jusqu'au-dessous dudit bord inférieur (22) de ladite plaque rigide (20) afin d'empêcher l'introduction de débris entre ladite une zone parmi ladite zone de pignon (4) et ladite zone de galet libre et ladite chenille (2) dans une situation de conduite dudit véhicule (5),
**caractérisé en ce que** ledit patin résilient (30) est monté par rapport à ladite plaque rigide (20) de manière à définir un point de type articulation (35) permettant à ladite partie inférieure (34) de buter partiellement sur ladite plaque rigide (20) de manière à résister dans la direction d'introduction lorsque ladite chenille (2) se déplace en direction de ladite une zone parmi ladite zone de pignon (4) et ladite zone de galet libre, et permettant à ladite partie inférieure (34) de pivoter autour dudit point de type articulation (35) en s'éloignant de ladite plaque rigide (20) lorsque ladite chenille (2) s'éloigne de ladite une zone parmi ladite zone de pignon (4) et ladite zone de galet libre.

2. Déflecteur (10) selon la revendication 1, dans lequel ledit patin résilient (30) possède une pluralité d'éléments de renfort verticaux (40) qui font saillie depuis au moins une surface dudit patin résilient (30).

3. Déflecteur (10) selon la revendication 2, dans lequel au moins un parmi lesdits éléments de renfort (40) a une longueur différente des autres.

4. Déflecteur (10) selon la revendication 2 ou 3, dans lequel lesdits éléments de renfort (40) sont agencés au sein dudit patin résilient selon un intervalle prédéterminé.

5. Détecteur (10) selon l'une quelconque des revendications 1 à 4, dans lequel ledit patin résilient (30) est constitué d'un matériau composite moulé.

6. Déflecteur (10) selon l'une quelconque des revendications 1 à 5, dans lequel ladite partie inférieure (34) dudit patin résilient (30) a une forme qui correspond de manière générale à celle du profil de l'intérieur (6) d'au moins un parmi lesdites chenilles (2).

7. Déflecteur (10) selon la revendication 1, dans lequel au moins une partie de ladite plaque rigide (20) présente la forme d'un arc qui suit le diamètre de pignon (4) ou de galet libre.

8. Détecteur (10) selon la revendication 1 ou 7, dans lequel ladite plaque rigide (20) est conçue pour éviter toute interférence avec l'intérieur (6) de ladite chenille (2) et est positionnée avec un espace d'environ 12,5 mm à 37,5 mm le séparant dudit pignon (4) ou dudit galet libre.

9. Déflecteur (10) selon l'une quelconque des revendications 1, 7 ou 8, dans lequel ledit bord inférieur (22) de ladite plaque rigide (20) a une forme qui est de manière générale similaire à celle de ladite partie inférieure (34) dudit patin résilient (30).
